Europäisches Patentamt

European Patent Office

Office européen des brevets

(11) Publication number: **0 129 633**
A1

## (12) EUROPEAN PATENT APPLICATION

(21) Application number: 83850179.9

(22) Date of filing: 27.06.83

(51) Int. Cl.⁴: **B 21 B 27/02**
**F 16 D 1/08**

(43) Date of publication of application:
02.01.85 Bulletin 85/1

(84) Designated Contracting States:
AT BE CH DE FR GB IT LI LU NL SE

(71) Applicant: Centro-Morgärdshammar AB
Box 502
S-777 01 Smedjebacken(SE)

(72) Inventor: Danielsson, Kurt
Lyrvägen 15
S-177 00 Smedjebacken(SE)

(74) Representative: Grennberg, Erik Bertil et al,
H ALBIHNS PATENTBYRA AB Box 7664
S-103 94 Stockholm(SE)

(54) A mounting for a roll unit, particularly in a wire rod mill.

(57) A mounting for a roll unit, particularly useful in a wire rod mill. A roll ring (1) having a cylindrical center bore (2) is mounted on a tapered portion of a roll neck, with a centering ring means (4) in between, which has an outside cylinder surface and an inner conical surface. Between those two surfaces is a closed slit gap space (7) filled with hydraulic oil and corresponding with a threaded hole (12"), in which is sealingly entered a threaded screw (12'). By screwing in the screw, the pressure of the hydraulic oil is increased and presses the surface of the ring means (4) from each other in a controlled way, fixing the roll ring (4) to the roll neck, creating the necessary friction therebetween to provide driving torque to the roller ring, without risking its splitting.

EP 0 129 633 A1

./...

FIG. 2

0129633

## A mounting for a roll unit, particularly in a wire rod mill

The invention regards a mounting for a roll unit, particularly in a wire rod mill, whereby a roll ring having a cylindrical center bore is mounted on a tapered portion of a roll neck, with an intermediate centering ring means having a cylindrical outer surface in contact with the cylindrical wall of the center bore of the rollring and a conical inner surface in contact with the tapered part of the roll neck, whereby a torque is arranged to be transferred from the roll neck to the roll ring via frictional forces determined by a normal pressure applied to the surfaces of the roll ring.

A wire rod mill has roll units where pairs of rolls are alternatively arranged with horizontal and vertical axial directions. The rolls in the pairs are arranged on free ends of rotatably driven shafts. On the shafts are mounted replaceable roll rings. The present invention regards the mounting, demounting and replacing of such roll rings on the shafts in such a wire rod mill.

The material of the roll rings is normally hard metal sintered carbide, a material which, due to limited tensile strength, is susceptible of splitting. Although new materials are now forthcoming which are improved in this respect, the risk of splitting will still be very real if tensile forces are inconsiderately applied.

The roll necks on which the roll rings are mounted have a conical taper. In order to fix the roll ring, it would then be an attractive solution to clamp it by means of a conical centering ring inserted between the tapered roll neck and the inner wall of the center bore of the roll ring. The risk of splitting has, however, led to the almost general avoidance of this solution. The generally accepted solutions have therefore used an axial clamping force applied on the roll ring between an inner shoulder on the roll shaft and a clamping ring mounted outside the roll ring on the roll neck. The normal pressure thus applied makes the friction force sufficient for rotating the roll ring by means of the shaft.

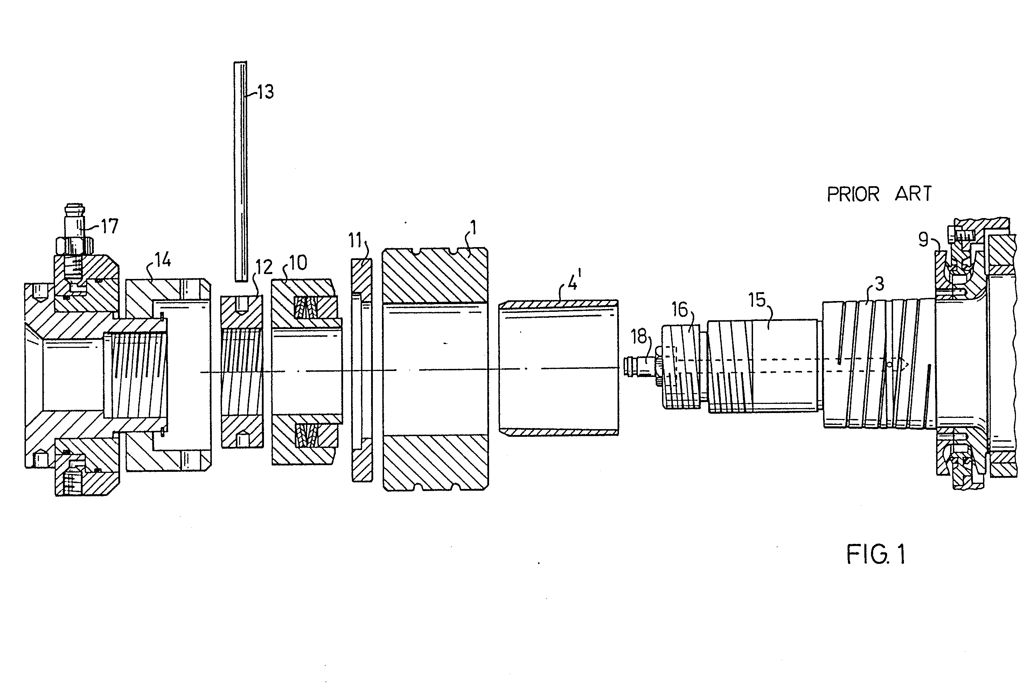

A mounting for a roll unit as recited above is previously known and manufactured by us. This solution is shown in Fig. 1 and will now be described.

The roll neck shown in Fig. 1 has a tapered surface 3 and an inner shoulder 9. The mounting of the roll ring 1 is accomplished in the following way. The centering ring 4' is mounted in the bore of the roll ring 1, which is then put on the tapered portion 3 of the roll neck, to abut against shoulder 9. The press ring 11 is then applied, followed by cup spring 10 and threaded ring 12, which is screwed on to the thread 15 of the roll neck. A pressing-tool 14 is then screwed on to the outer thread 16 of the roll neck. A pressure fluid is applied by means of mouthpiece 17, and the edge of pressing-tool 14 will then apply an axial pressure on the periphery of cup spring 10, such that a controlled axial pressure force will be applied on the roll ring, clamping it between shoulder 9 and press ring 11. After pressure is applied, threaded ring 12 is threaded home by means of tool 13 against the cup spring 10. The pressing-tool 14 can now be deactivated and removed.

Demounting is made in opposite order. However, even after the pressure from cup spring 10 is removed, the roll ring 10 and centering ring 4' will stick to the tapered portion 3. Therefore, it is necessary to apply a pressure fluid to mouthpiece 18 on the shaft, whereby roll ring 1 and centering ring 4 will come loose violently. It should be noted that the equipment of Fig. 1 must be made to a rather high precision, as the roll ring must be closely fitted to the roller shaft in order to enable the high rolling pressures necessary in a roll pair.

Another prior art mounting built on much the same principle is known from Swedish patent 7703169-8. Also this solution envisages the pressing of the roll ring between a shoulder and a ring, by means of a spring tensioned by means of a hydraulic tool and subsequently secured by screwing home a threaded ring against the spring.

It is a main object of the invention to obtain a mounting for a roll unit which is simpler both of handling and of construction. A particular object of the invention is to obtain a mounting where the demands on high precision are less stringent than in the prior art, and another object is to obtain a less costly construction.

A particular problem in the rolling mill industry is that the demands for workmanship having great corporal force leads to a lesser frequency of workmen having a great aptitude for handling fine precision mechanics - workmen with such aptitude do not select employment in roll mills. Therefore, a solution must be sought where there are no high demands for sensitivity of touch. It is another object of the invention to satisfy this practical condition.

The above objects and other objects and advantages are obtained, according to the invention, through a mounting for a roll unit as above recited, wherein the centering ring means is provided with a closed slit gap space which is arranged between its axially directed surfaces, surrounding its inner surface and elongated in its axial direction, which slit gap space is filled with a pressure fluid and communicates with a threaded bore in which a threaded screw is sealingly screwed, and whereby a screwing in of the screw is arranged to pressurize the pressure fluid and thereby augment the distance between the cylindrical and conical surfaces of the ring means for securing the roll ring to the roll neck and for controllably applying said normal pressure
to said surface of the roll ring.

This inventive solution thus avoids the means for applying
the axial clamping previously thought necessary in practice.
The normal pressure used to obtain frictional force for
transferring torque to the roll ring from the roll shaft is
instead a radial force, which, however, is not obtained by
the axially forcing in of a ring wedge but instead by using
a particular ring wedge which can be made to "swell" by
the simple means of screwing home a threaded screw.

In order to satisfy the object of obtaining a wedge force
which is within safe limits for avoiding the splitting of
the roll ring, it is very advisable to use a small torque
wrench adjusted to a set maximum.  The necessary torque
being quite small, the torque wrench may be an instrument
small enough to carry in a breast pocket.  Further, the
whole equipment needed for the mounting consists of the
centering ring means and this pocket torque wrench, and
all cumbersome hydraulic-pressure equipment, flexible pipes,
joints, etc. may be done away with, together with all risk
of spilling hydraulic liquid, thus doing away with the risk
of slipping accidents.  Further, no threads are necessary
on the shafts of the wire rod block, and the shafts may
be shortened, nothing more than the tapered end being
needed.  It may be noted that the roll ring will easily be
freed by the simple means of screwing out the pressure screw
of the centering means.

The invention will now be further described with reference
to a non-limiting example shown in the figure.  Fig. 1,
already referred to, shows an example of the prior art.

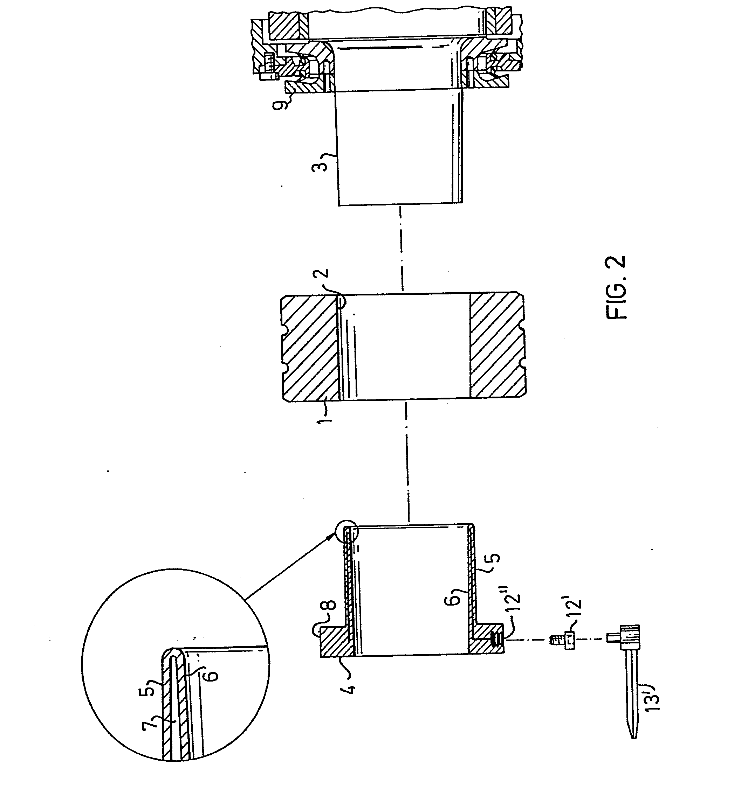

Fig. 2 shows an exploded view of a mounting for a roll unit
constructed according to the invention.

In Fig. 2, the same reference figures have been used as in Fig. 1 when applicable. A roller shaft, which may be a shortened version of that shown in Fig. 1, is provided with a shoulder 9 and a tapered end 3. A roll ring 1 has a cylindrical center bore 2 and may be provided with two rolling pass grooves. In a wire rod block, the different grooves must be arranged in line, and therefore at one and the same axial position, and it is therefore suitable to be able to turn the roller either way, in order to utilize either of the grooves. Therefore, the bore of the roll ring is suitably cylindrical, giving the necessary symmetry in this respect.

A centering ring means is shown at 4 and has a cylinder surface 5 for fitting in the bore 2, and a tapered bore 6, for fitting on the taper 3 of the shaft. When mounting, the centering ring means 4 is fitted in the bore 2, and the roll ring is brought on to the shaft, which may be made by one person without much difficulty. (For reference, it may be mentioned that the shaft diameter can be of the order of 80-150 mm).

A slit gap space 7 (best seen in the detail view) is arranged in the ring means 4, which space is closed and communicates with a small threaded bore 12", in which is screwed a screw 12'. The space 7 is filled with hydraulic oil, and the screw 12' is provided with sealing means (not shown). This gap 7 is obtained by mounting two tubes concentrically and welding their ends together as apparent from the detail view.

Although the shoulder 9 has no longer any function of exerting force, it is still utile for adjusting purposes, as the position of the roll ring is determined by pressing it home on to the shoulder by hand when mounting. After this mounting, screw 12' is screwed in until a predetermined pressure is obtained inside the gap 7, by means of a suitably adjusted torque wrench 13.

It should be mentioned that one roll ring mounted according to the invention may be exchanged in 15-20 seconds, as compared to around 10 minutes necessary for a mounting of the type described with reference to Fig. 1. As one roll unit may comprise ten roll pairs, i.e. twenty roll rings to be changed, it is clear that a very important time saving is possible, leading to a corresponding increase of productivity of the wire rod mill.

7    0129633

CLAIMS

1. A mounting for a roll unit, particularly in a wire rod mill, whereby a roll ring (1) having a cylindrical center bore is mounted on a tapered portion (3) of a roll neck, with an intermediate centering ring means (4) having a cylindrical outer surface (5) in contact with the cylindrical wall (2) of the center bore of the roll ring and a conical inner surface (6) in contact with the tapered part of the roll neck (3), whereby a torque is arranged to be transferred from the roll neck to the roll ring via frictional forces determined by a normal pressure applied to a surface of the roll ring, characterized by a closed slit gap space (7) in the ring means, said slit gap space being arranged between its said surfaces (5,6), surrounding its inner surface and elongated in its axial direction, said slit gap space being filled with a pressure fluid and communicating with a threaded bore (12") into which a threaded screw (12') is sealingly screwed, and whereby a screwing in of the screw (12') is arranged to pressurize the pressure fluid and thereby to augment the distance between the cylindrical and conical surfaces of the ring means, for securing the roll ring (1) to the roll neck (3) and for controllably applying said normal pressure to said surface (2) of the roll ring (1).

2. A mounting for a roll unit, characterized in comprising a torque wrench (13') for the screwing in of the screw (12') to a predetermined torque value and thereby applying a predetermined normal pressure to the roll ring (1).

PRIOR ART

FIG. 1

0129633

FIG. 2

**0129633**

Application number

European Patent
Office

**EUROPEAN SEARCH REPORT**

EP 83 85 0179

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 215 554 (AB METALFORM) <br> * Figures 1-3; pages 1-9 * | 1 | B 21 B 27/02 <br> F 16 D 1/08 |
| A | FR-A-2 341 778 (FORENADE FABRIKSVERKEN) <br> * Figures 3,4; page 5, lines 31-37; pages 6-8 * | 1 | |
| A | DE-C- 743 530 (HOFER) <br> * Figure 1; pages 1,2 * | 1 | |
| A | FR-A-1 389 845 (MORGAN CONSTRUCTION COMPANY) <br> * Figures; page 2, column 1, paragraph 8 * | 1 | |
|  | ----- |  | TECHNICAL FIELDS SEARCHED (Int. Cl. ³) <br><br> B 21 B <br> F 16 C <br> F 16 D |

The present search report has been drawn up for all claims

| Place of search <br> THE HAGUE | Date of completion of the search <br> 02-03-1984 | Examiner <br> NOESEN R.F. |
|---|---|---|